Europäisches Patentamt

European Patent Office

Office européen des brevets

(19)

(11) **EP 1 026 760 B1**

(12) **FASCICULE DE BREVET EUROPEEN**

(45) Date de publication et mention
de la délivrance du brevet:
**02.03.2005 Bulletin 2005/09**

(51) Int Cl.⁷: **H01M 2/26**

(21) Numéro de dépôt: **99403088.0**

(22) Date de dépôt: **09.12.1999**

(54) **Electrode spiralée à support tridimensionnel**

Spiralförmig gewickelter dreidimensionaler Elektroden-Support

Spirally wound three-dimensional electrode support

(84) Etats contractants désignés:
**DE FR GB**

(30) Priorité: **01.02.1999 FR 9901081**

(43) Date de publication de la demande:
**09.08.2000 Bulletin 2000/32**

(73) Titulaire: **ALCATEL**
**75008 Paris (FR)**

(72) Inventeurs:
• **Caillon, Georges**
**33520 Bruges (FR)**
• **Najean, Rémi**
**16410 Sers (FR)**
• **Pineau, Christian**
**16440 Roullet (FR)**
• **Dupuy, Christian**
**16230 Fontenille (FR)**
• **Mazalrey, Jérôme**
**24360 Varaignes (FR)**
• **Kerybin, Jean-Yves**
**16000 Angouleme (FR)**

(74) Mandataire: **Pochart, François et al**
**Cabinet Hirsch**
**58, avenue Marceau**
**75008 Paris (FR)**

(56) Documents cités:
**EP-A- 0 516 535          GB-A- 2 055 899**

• **PATENT ABSTRACTS OF JAPAN vol. 006, no. 160 (E-126), 21 août 1982 (1982-08-21) & JP 57 080672 A (YUASA BATTERY CO LTD), 20 mai 1982 (1982-05-20)**

## Description

La présente invention concerne une électrode destinée à être spiralée, de type empâté dont le support tridimensionnel est notamment une mousse métallique conductrice. Elle concerne plus particulièrement, mais non exclusivement, les accumulateurs à électrolyte alcalin nickel-cadmium (Ni-Cd) ou nickel-métal hydrurable (Ni-MH) de forme cylindrique utilisés pour des applications portables.

Elle s'étend en outre au procédé de fabrication de cette électrode et à son utilisation dans un générateur électrochimique.

L'électrode de type empâté est composée d'un support conducteur qui peut être bidimensionnel ou plan, comme un feuillard plein ou perforé, un métal déployé, une grille ou un tissu, ou bien un support tridimensionnel comme une mousse ou un feutre. Ce support est enduit d'une couche de pâte contenant la matière électrochimiquement active et le plus souvent un liant.

Lors de l'assemblage du générateur électrochimique, l'électrode doit être reliée électriquement à la borne de sortie de courant. Cette liaison s'effectue généralement par l'intermédiaire d'une connexion fixée d'une part sur la partie interne de la borne et d'autre part sur le support conducteur de l'électrode. La connexion est de préférence soudée sur le support pour rendre le contact électrique fiable.

Dans le cas de générateurs dont le faisceau d'électrodes est spiralé il est avantageux de pouvoir souder la connexion directement sur la tranche des électrodes. Lorsque le support de l'électrode est un support tridimensionnel de grand volume poreux, sa tranche ne présente pas la solidité nécessaire pour y souder directement une connexion. Plusieurs documents proposent donc de renforcer le bord du support avant d'y fixer la connexion.

On peut renforcer le support en fixant le long du bord longitudinal une bande de renfort constituée d'un ruban métallique.

La demande de brevet japonais JP-62 219 462 décrit une électrode à support fibreux dont le bord est renforcé par un ruban métallique plié en forme de U qui est placé à cheval et soudé par point sur le support. Une languette de connexion est ensuite fixée sur le ruban.

On a suggéré d'utiliser une bande de renfort à bord découpé. La bande est comprimée sur le support de manière à insérer les découpes dans les pores du support et ainsi accrocher la bande au support.

La demande de brevet japonais JP-62 237 665 propose d'utiliser une plaque métallique pliée en U dont le bord est crénelé. La plaque est comprimée sur le support en feutre de telle sorte que les reliefs s'accrochent au support.

Le brevet anglais GB-2 055 899 décrit une électrode à support poreux. Le renfort est une plaque conductrice dont le bord est découpé en dents de scie et replié perpendiculairement à la plaque. Une pression est exercée sur les dents afin qu'elles pénètrent dans le support. Un dépôt métallique vient consolider l'ensemble.

Une telle bande de renfort est coûteuse à réaliser et difficile à mettre en place de manière fiable et reproductible.

Une autre solution est d'utiliser une bande de renfort constitué d'un matériau très poreux, qui peut être identique au matériau du support. La bande de renfort est comprimée sur le support de telle sorte que les deux matériaux s'interpénètrent.

Le brevet européen EP-0 658 946 décrit une électrode plane dont le bord est renforcé par la compression de plusieurs épaisseurs de mousse similaire à celle constituant le support.

Selon la demande de brevet japonais JP-57 080 672 on plie une ou plusieurs fois sur lui-même le bord d'un support feutre et on le comprime.

Toutes les méthodes de renforcement précédemment décrites ont pour effet de rigidifier le bord longitudinal de l'électrode, rendant très difficile la flexion imposée par le spiralage ultérieur de l'électrode.

La demande de brevet européen EP-0 516 535 propose de disposer de part et d'autre du bord de l'électrode une connexion en métal déployé ou en feuillard perforé de taux de jour supérieur à 40% qui est fixée par compression.

Cette solution est difficilement utilisable à cause du risque important de court-circuit. Les courts-circuits sont provoqués par les brins métalliques libres situés sur le bord de la connexion qui peuvent perforer le séparateur et entrer en contact avec l'électrode de polarité opposée.

La présente invention a pour but de proposer une électrode spiralée à support tridimensionnel, ayant un bord longitudinal est renforcé en vue de recevoir une connexion soudée sur sa tranche, qui se spirale plus facilement et dont le risque de court-circuit est moindre que pour les électrodes connues.

L'objet de la présente invention est une électrode comprenant un support conducteur tridimensionnel poreux, au moins une bande métallique de renfort étant fixée le long du bord longitudinal dudit support, caractérisée en ce que ladite bande a un coefficient d'allongement avant rupture au moins égal à 20% dans la direction parallèle au bord dudit support et en ce que les deux bords longitudinaux de ladite bande sont repliés du même côté contre l'une des faces de ladite bande, ladite face étant appliquée contre ledit support pour au moins une partie de sa surface.

Ainsi on évite la survenue de court-circuit lié à la présence de brins métalliques s'échappant du bord de la bande en enfermant ces brins entre la bande et le support de l'électrode.

Pour conserver à l'électrode la souplesse longitudinale indispensable au spiralage, il est nécessaire que la bande de renfort possède elle-même une grande souplesse qui n'est obtenue que lorsque la bande est capable de subir un allongement suffisant sans se déformer. On évalue cette aptitude par le coefficient d'allongement avant rupture, défini comme l'écart entre la longueur à la rupture et la longueur initiale rapporté à la longueur initiale de l'échantillon, qui est mesuré de la manière suivante.

Un échantillon du matériau à caractériser est inséré entre les mors d'une machine de traction, la longueur $L_0$ entre mors est de 100mm, la largeur de l'échantillon est celle de la bande qui sera utilisée pour renforcer le bord de l'électrode. La vitesse de traction est de 100mm/min La longueur à la rupture Lr est déterminée sur la courbe de réponse de la force de traction en fonction de l'élongation.

Le coefficient d'allongement avant rupture $\gamma$ exprimé en % est calculé selon la relation :

$$\gamma = 100(Lr-L_0)/L_0$$

De préférence ladite bande est choisie parmi un déployé, une grille, et un feuillard perforé de taux de jour au moins égale à 40%, et de préférence au moins égale à 50%. Le taux de jour est défini comme le rapport de la surface de vide par rapport à la surface totale de la bande.

Il est possible de plier la bande en U dans le sens de la longueur de manière à la placer à cheval sur le bord de l'électrode, ses bords repliés étant emprisonnés à l'intérieur du U. Deux bandes dont les deux bords sont repliés peuvent être aussi disposées de part et d'autre du support.

Ladite bande est de préférence disposée d'un seul côté dudit support. Avantageusement ladite bande est disposé du côté dudit support qui se trouve à l'extérieur au cours du spiralage. Ainsi la bande se trouve soumise à une traction qu'elle accompagne en s'allongeant sans se déformer. Placée du côté de l'intérieur du bobineau, elle risque de se déformer ; cette déformation pouvant entraîner des surépaisseurs préjudiciables au spiralage.

Le support est habituellement une mousse de nickel. La bande peut être en nickel, en acier nickelé ou en acier inoxydable.

Ladite bande est avantageusement soudée sur ledit support. La fixation de la bande sur le support est plus solide et la continuité électrique est assurée de manière fiable. La soudure peut être une soudure par points, à la molette en points jointifs, ou par ultrasons.

L'invention a aussi pour objet un générateur électrochimique comprenant une telle électrode spiralée pour former un bobineau et raccordée électriquement à une borne par l'intermédiaire d'une pièce de connexion soudée d'une part sur la tranche du bobineau et d'autre part sur la borne.

Le matériau de la pièce de connexion peut être le nickel, l'acier nickelé ou l'acier inoxydable. De préférence ladite bande est constitué du même métal que ladite pièce de connexion. Ainsi on facilite les opérations de soudage

Selon une première forme d'exécution de l'invention, l'électrode contient comme matière électrochimiquement active de l'hydroxyde à base de nickel.

Selon une deuxième forme d'exécution, l'électrode contient une matière électrochimiquement active à base de cadmium.

Selon une troisième forme d'exécution de l'invention, l'électrode contient comme matière électrochimiquement active un alliage métallique capable d'absorber l'hydrogène pour former un hydrure.

Selon une quatrième forme d'exécution de l'invention, l'électrode contient comme matière électrochimiquement active un matériau carboné capable d'insérer du lithium dans sa structure, comme par exemple le graphite, le coke, le noir de carbone et le carbone vitreux

Selon une cinquième forme d'exécution de l'invention, l'électrode contient comme matière électrochimiquement active un oxyde d'un métal de transition, comme par exemple l'oxyde de vanadium, les oxydes lithiés de manganèse, nickel, et cobalt, et les oxydes lithiés contenant du nickel, du cobalt, du manganèse ou de l'aluminium.

L'invention sera mieux comprise et d'autres avantages et particularités apparaîtront à la lecture de la description qui va suivre, donnée à titre non limitatif, accompagnée du dessin annexé dans lequel :

- la figure 1 est une vue de face d'un premier mode de réalisation de l'électrode selon la présente invention,
- la figure 2 est une vue de côté d'un premier mode de réalisation de l'électrode selon l'invention,
- la figure 3 est une vue schématique du bobineau et de la pièce de connexion,
- la figure 4 représente un deuxième mode de réalisation de l'invention.

Il doit être bien entendu, toutefois, que ces dessins et les parties descriptives correspondantes, sont donnés uniquement à titre d'illustration de l'objet de l'invention, dont ils ne constituent en aucune manière une limitation.

EXEMPLE 1

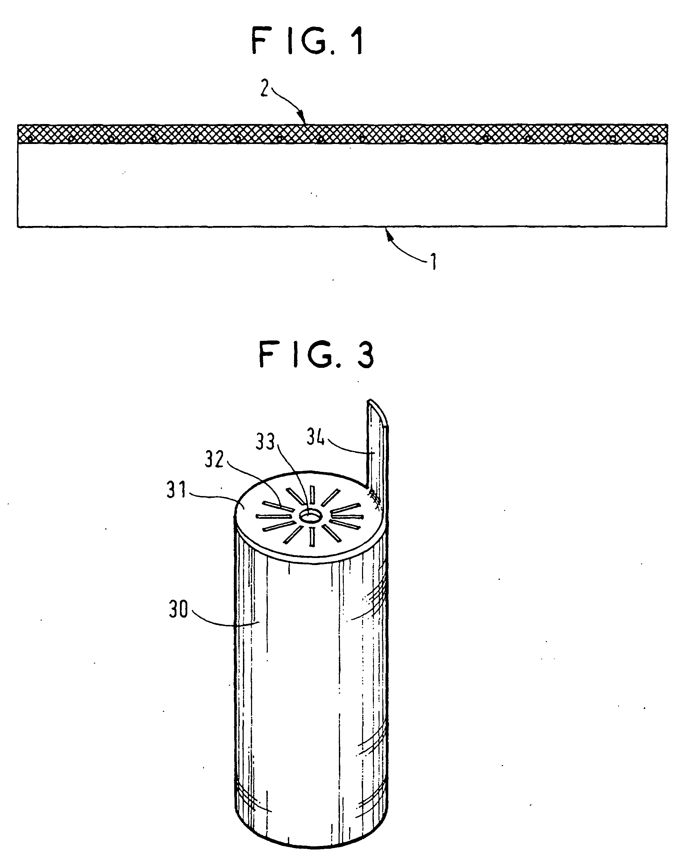

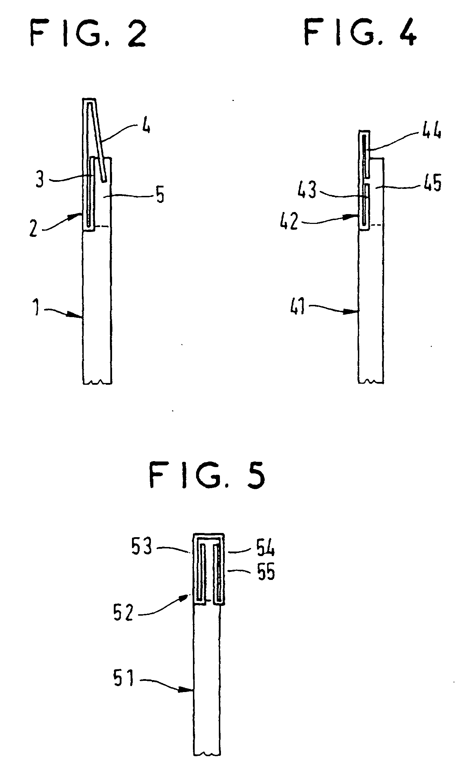

On fabrique une électrode 1 selon l'invention représentée sur les figures 1 et 2 comportant un support collecteur de courant qui est une bande de mousse de nickel d'environ 250mm de long et 32mm de large. Une pâte contenant la matière électrochimiquement active, qui est un hydroxyde à base de nickel, et un liant est introduite dans la porosité de la mousse.

On prépare une bande 2 qui est une grille d'acier inoxydable, d'environ 6mm de large et de même longueur que l'électrode 1, découpée de telle sorte que sont axe longitudinal soit parallèle à la diagonale des mailles de la grille. Les bords longitudinaux 3 et 4 sont repliés contre l'une des face de la grille 2, du même côté, en se recouvrant partiellement de manière à former une bande de moindre largeur dont les bords ne présentent pas de brins libres.

L'un des bords longitudinaux 5 de l'électrode 1 est débarrassé de sa couche active sur environ 1 à 2mm par soufflage à l'air comprimé et traitement par ultrasons. On applique la grille 2 sur le bord 5 de telle sorte que les bords repliés 3, 4 de la grille 2 soient placés contre l'électrode 1. Les brins libres de la grille se trouvent ainsi emprisonnés contre la mousse.

La grille 2 est fixé sur l'électrode 1 par soudure électrique par points espacés de 1cm. L'électrode 1 est ensuite amenée à son épaisseur définitive par compression.

On superpose l'électrode 1 positive réalisée précédemment, un séparateur de polyamide, et une électrode négative dont la matière électrochimiquement active est à base de cadmium. On spirale l'empilage pour former un bobineau 30 comme représenté sur la figure 3, en prenant soin de placer le côté de l'électrode portant la bande de tel sorte qu'il se trouve vers l'extérieur du bobineau 30.

Sur la grille 2 renforçant la tranche de l'électrode 1 positive enroulée, on soude une pièce de connexion 31 qui est un disque en acier nickelé comportant des ouvertures 32 bordée de deux lèvres qui viennent au contact du bobineau.

Après introduction dans un conteneur, on imprègne le bobineau d'électrolyte en utilisant notamment l'orifice central 33 de la pièce 31 L'électrolyte alcalin comprend un mélange d'hydroxyde de potassium (KOH), d'hydroxyde de sodium (NaOH), et d'hydroxyde de lithium (LiOH) en solution aqueuse.

La pièce de connexion 31 porte une patte 34 dont l'extrémité opposée est fixée sur la partie interne d'une borne de sortie de courant après addition de l'électrolyte. Le générateur est fermé par sertissage d'un couvercle sur le conteneur.

EXEMPLE 2

On fabrique une électrode 41 selon l'invention représentée sur la figure 4 comportant un support collecteur de courant et une couche active analogue à ceux de l'exemple 1.

On prépare une bande 42 qui est en acier nickelé déployé, d'environ 4mm de large et de même longueur que l'électrode 41. Les bords longitudinaux 43 et 44 sont repliés sur l'une des face du déployé 42, du même côté. Le repli de chaque bords 43, 44 a une largeur au plus égale à la moitié de celle de la bande 42 de telle sorte que les bords 43, 44 ne se chevauchent pas. On obtient ainsi une bande de moindre largeur dont les bords ne présentent pas de brins libres.

Comme dans l'exemple 1, l'un des bords longitudinaux 45 de l'électrode 41 est débarrassé de sa couche active et on applique le déployé 42 le long du bord 45 de telle sorte que les bords repliés 43, 44 du déployé 42 soient placés contre l'électrode 41. Les brins libres du déployé se trouvent ainsi emprisonnés contre la mousse.

Le déployé 42 est fixé sur l'électrode 41 par soudage à la molette avec des points jointifs. L'électrode 41 est ensuite amenée à son épaisseur définitive par compression.

On superpose l'électrode 41 positive réalisée précédemment, un séparateur de polyoléfine, et une électrode négative dont la matière électrochimiquement active est un alliage métallique capable d'absorber l'hydrogène. On spirale l'empilage pour former un bobineau.

Sur le déployé 42 renforçant la tranche de l'électrode 41 positive enroulée, on soude une pièce de connexion analogue à celle de la figure 3 en acier nickelé, portant une patte dont l'extrémité opposée est fixée sur la partie interne d'une borne de sortie de courant.

Après introduction dans un conteneur, le bobineau est imprégné d'un électrolyte alcalin analogue à celui de l'exemple 1. Le générateur est fermé par sertissage d'un couvercle sur le conteneur.

EXEMPLE 3

Comme représenté sur la figure 5, on fabrique une électrode 51 selon l'invention. On prépare une bande 52 qui est une grille analogue à celle de l'exemple 1. Les bords longitudinaux 53 et 54 sont repliés contre l'une des face de la grille 52 du même côté de telle sorte que les bords 53, 54 ne se touchent pas. La bande 52 est ensuite pliée en deux en forme de U selon un axe longitudinal. La bande 52 pliée est alors placée à cheval sur le bord 55 de l'électrode préalablement débarrassé de sa couche active. La bande 52 est enfin soudée sur le bord 55.

**Revendications**

1. Electrode comprenant un support conducteur tridimensionnel poreux, au moins une bande métallique de renfort étant fixée le long du bord longitudinal dudit support, **caractérisée en ce que** ladite bande a un coefficient d'allongement avant rupture au moins égal à 20% dans la direction parallèle au bord dudit support, et **en ce que** les deux bords longitudinaux de ladite bande sont repliés du même côté contre l'une des faces de ladite bande, ladite face étant appliquée contre ledit support pour au moins une partie de sa surface.

2. Electrode selon la revendication 1, dans laquelle ladite bande est choisie parmi un déployé, une grille, et un feuillard perforé de taux de jour au moins égal à 40%.

3. Electrode selon l'une des revendications 1 et 2, dans laquelle ladite bande est disposée d'un seul côté dudit support.

4. Electrode selon la revendication 3, dans laquelle ladite bande est disposée du côté dudit support qui se trouve à l'extérieur au cours du spiralage.

5. Electrode selon l'une des revendications précédentes, dans laquelle ladite bande est soudée sur ledit support

6. Générateur électrochimique comprenant une électrode selon l'une des revendications précédentes, ladite électrode étant spiralée pour former un bobineau et raccordée électriquement à une borne par l'intermédiaire d'une pièce de connexion soudée d'une part sur la tranche dudit bobineau et d'autre part sur ladite borne.

7. Générateur selon la revendication 6, dans lequel ladite bande est constitué du même métal que ladite pièce de connexion.

8. Générateur selon l'une des revendications 6 et 7, dans lequel ladite électrode contient comme matière électrochimiquement active de l'hydroxyde à base de nickel.

## Claims

1. An electrode comprising a porous three-dimensional conductive support and at least one reinforcing metal band fixed along a longitudinal edge portion of said support **characterized in that** said band has a coefficient of elongation to rupture equal to at least 20% in a direction parallel to said edge portion of said support, wherein two longitudinal edge portions of said band are bent against the same face of said band, at least part of whose surface is pressed against said support.

2. The electrode claimed in claim 1 wherein said band is made of expanded metal, mesh or perforated strip having a voids ratio equal to at least 40%.

3. The electrode claimed in claim 1 or 2 wherein said band is disposed on one side only of said support.

4. The electrode claimed in claim 3 wherein said band is disposed on a side of said support which is on the outside during winding into a spiral.

5. The electrode according to one of the preceding claims, wherein said band is welded to said support.

6. A storage cell comprising an electrode as claimed in any preceding claim spiral- wound to form a spool and electrically connected to a terminal by a connection member welded to an edge of said spool and to said terminal.

7. The storage cell claimed in claim 6 wherein said band and said connection member are made of the same metal.

8. The storage cell claimed in claim 6 or claim 7, wherein said electrode contains electrochemically active material in the form of nickel-based hydroxide.

## Patentansprüche

1. Elektrode, umfassend einen dreidimensionalen porösen leitenden Träger, wobei mindestens ein metallisches Verstärkungsband entlang der Längsseite des Trägers befestigt ist, **dadurch gekennzeichnet, dass** das Band einen Reißdehnungskoeffizienten von mindestens 20% in Richtung parallel zur Seite des Trägers besitzt, und dass die zwei Längsseiten des Bands zur gleichen Seite in Richtung auf eine der Seiten des Bands geklappt sind, wobei diese Seite am Träger mit mindestens einem Teil ihrer Oberfläche angebracht ist.

2. Elektrode nach Anspruch 1, in der das Band zwischen einem Streckmetall, einem Gitter und einem perforierten Bandeisen mit einem Freiraumanteil von mindestens 40% ausgewählt ist.

3. Elektrode nach einem der Ansprüche 1 oder 2, in der das Band an einer einzigen Seite des Trägers angebracht ist.

4. Elektrode nach Anspruch 3, in der das Band an der Seite des Trägers angebracht ist, die sich im Spiralverlauf außen befindet.

5. Elektrode nach einem der vorhergehenden Ansprüche, in der das Band auf den Träger gelötet ist.

6. Elektrochemischer Generator, umfassend eine Elektrode nach einem der vorhergehenden Ansprüche, wobei die Elektrode spiralförmig ist, um eine Spule zu formen, und die Elektrode elektrisch mit einer Klemme über ein auf der einen Seite auf die Scheibe der Spule und auf der anderen Seite auf die Klemme gelötetes Verbindungsstück verbunden ist.

7. Generator nach Anspruch 6, in dem das Band aus dem gleichen Metall wie das Verbindungsstück gebildet ist.

8. Generator nach Anspruch 6 oder 7, in dem die Elektrode als aktiven elektrochemischen Stoff Hydroxid auf Basis von Nickel enthält.

# F I G. 1

# F I G. 3

# FIG. 2

# FIG. 4

# FIG. 5